(19)

Europäisches
Patentamt

European
Patent Office

Office européen
des brevets

(11) **EP 1 873 105 A2**

(12) **EUROPEAN PATENT APPLICATION**

(43) Date of publication:
**02.01.2008 Bulletin 2008/01**

(51) Int Cl.:
***B65H 63/06*** (2006.01)

(21) Application number: **07111082.9**

(22) Date of filing: **26.06.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **27.06.2006 JP 2006176293**

(71) Applicant: **MURATA KIKAI KABUSHIKI KAISHA
Kyoto (JP)**

(72) Inventors:
• **Nakade, Kazuhiko
c/o Murata Kikai Kabushiki Kaisha
Kyoto-shi
Kyoto 612-8686 (JP)**

• **Samoto, Yoshihiko
c/o Murata Kikai Kabushiki Kaisha
Kyoto-shi
Kyoto 612-8686 (JP)**
• **Noma, Eiji
c/o Murata Kikai Kabushiki Kaisha
Kyoto-shi
Kyoto 612-8686 (JP)**

(74) Representative: **Gritschneder, Martin et al
Abitz & Partner - Patentanwälte
Hörselbergstrasse, 5
81628 München (DE)**

(54) **A method for detecting dirt of a detection head of yarn clearer and system for the same**

(57)     A method for detecting dirt of a plurality of detection heads of yarn clearer which are mounted on a unit system comprising a plurality of spindles and which monitor yarn clearer of yarn quality and the like of each spindle in which whether data change of yarn thickness ($\Phi$) and/or yarn uniformity degree (CV%) obtained based on yarn unevenness signal output from a yarn clearer of predetermined spindle are attributed to intrinsic property of the monitored yarn or attributed to dirt of the above mentioned detection head is judged based on a relation between yarn thickness data and/or yarn uniformity degree (CV%) obtained based on yarn unevenness signal output from a yarn clearer of the other spindle.

Fig. 1

EP 1 873 105 A2

**Description**

[Field of the Invention]

The present invention is related to a yarn clearer for detecting yarn condition and removing defect portions.

[Prior Art]

A yarn clearer mounted on a spinning device and a yarn winding device is a device essential for detecting various yarn conditions including thickness and removing defect portions to maintain yarn quality. The yarn clearer is provided before piecing device. Generally, employed is a system type in which a single yarn clearer monitors and judges conditions of a plurality of spindles. In this case a single yarn clearer is provided with a plurality of detection heads. And the spinning device and the yarn winding device are respectively provided with a plurality of yarn clearers per system unit.

With this yarn clearer monitors e.g. yarn thickness ($\phi$) which has been employed as a sequence for judging and detecting whether it is defective or not, whether or not $\phi$ data measured by each spindle is within an upper and lower limit range set for $\phi$ unit mean value is judged, and if it is out of the range, it is judged as $\phi$ alarm expressing abnormal yarn number.

First a basic configuration and operation of this yarn clearer will be described hereinafter before the present invention is described in detail.

With regard to a yarn clearer, a various types including an electrical capacitance type and a photoelectric type besides a machine type and an electrification charge type are well known at present. Among these, the photoelectric type has been employed much for a yarn clearer capable of analyzing uniformity degree and detecting thickness unevenness, thereby capable of detecting more variety of yarn defects than conventional ones. Hereinafter, the yarn clearer is supposed to be of photoelectric type.

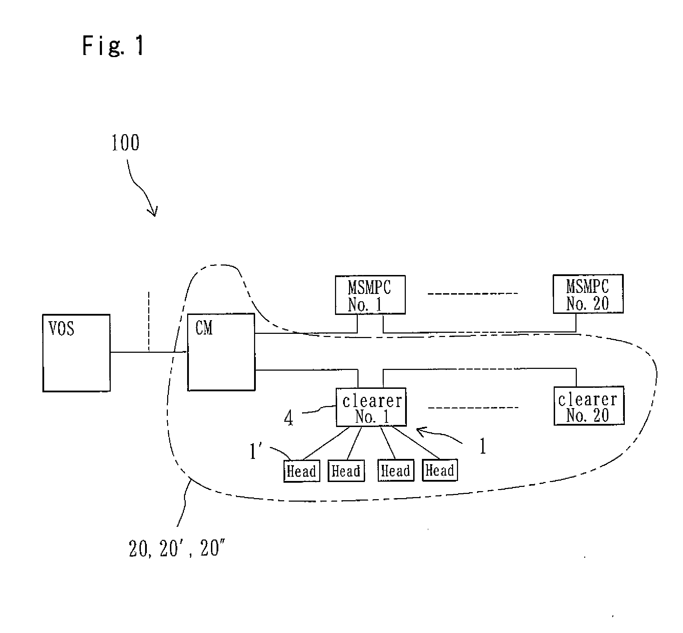

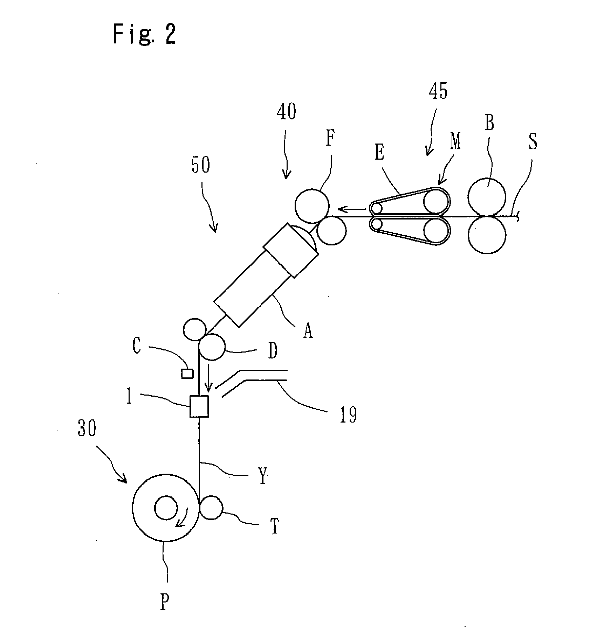

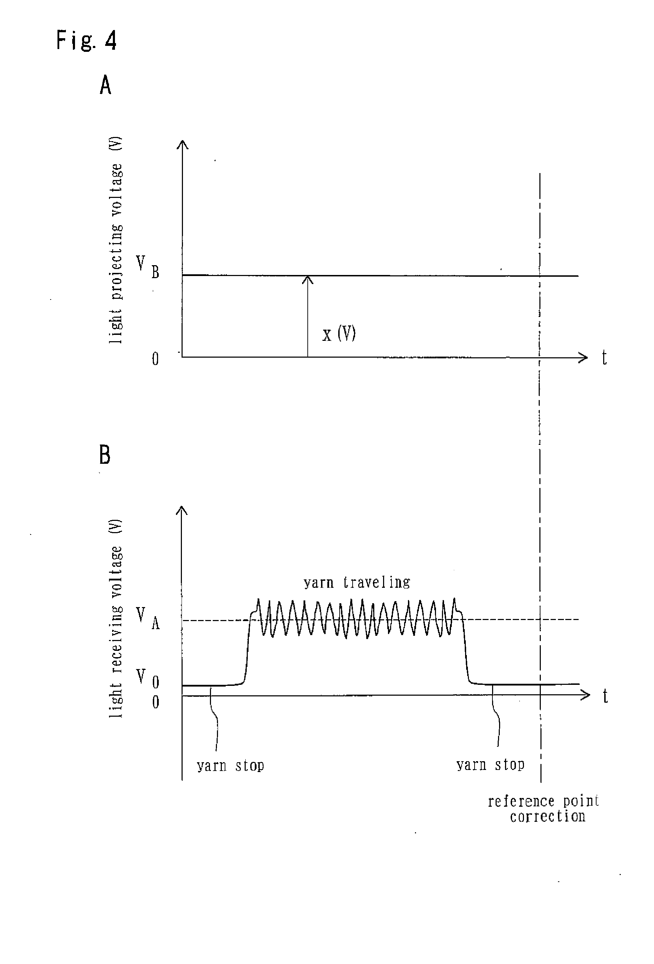

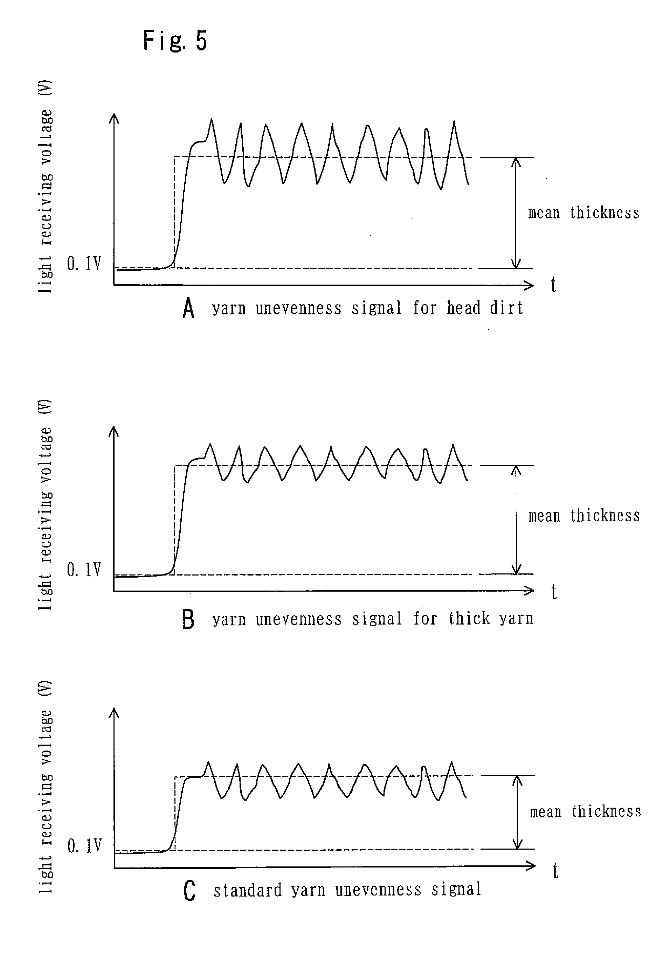

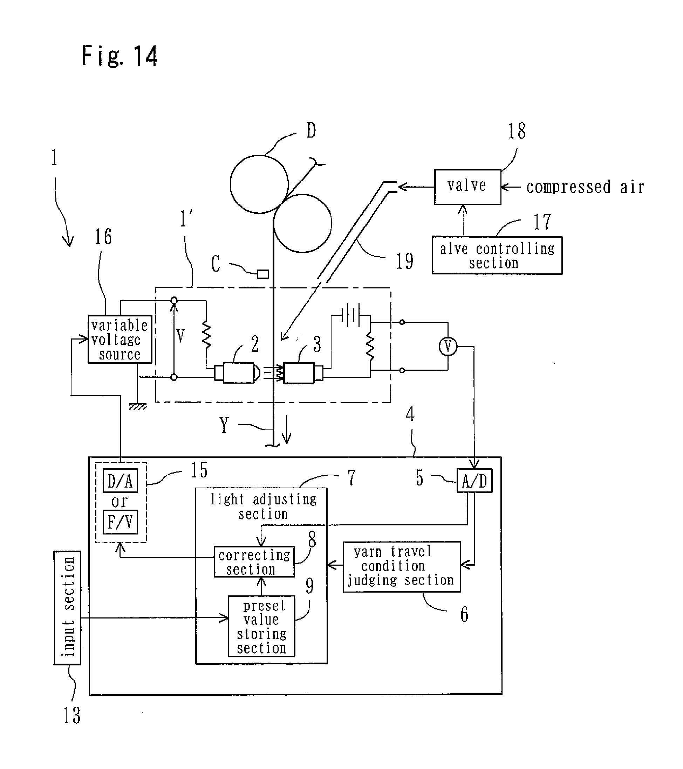

FIG. 14 is a block diagram showing a configuration of a conventional photoelectric type yarn clearer. This yarn clearer 1 is disposed between a spinning section 40 and a take-up section 30 of each spinning unit 50 of spinning machine described in for example FIGs. 1 and 2. And a cutter C for cutting yarn Y is provided upstream of the yarn clearer 1. As shown in FIG. 14, the photoelectric type yarn clearer 1 comprises a detection head 1' consisting of a projecting section 2 and a light receiving section 3. It is configured to output voltage (electric current) corresponding to the amount of received light as a detection signal when the light receiving section 3 receives light projected from the projecting section 2. A relation between projecting voltage and light receiving voltage is expressed as in FIGs. 4 and 5. The projecting section 2 is composed of light emitting element such as LED and the light receiving section 3 is composed of photoelectric conversion element such as phototransistor. Such a photoelectric conversion element is supposed to have a property of increasing voltage level in substantially proportion to shadow size in examples described hereinafter.

Here, Y axis shown in FIGs. 4 and 5 represents light receiving voltage and the received light amount generally decreases because the yarn shadow increases as yarn thickness increases. On the contrary, the received light appears to increase in FIG. 5. This is because actual voltage is treated to purposely conduct operation for easy understanding.

In the above mentioned yarn clearer 1, when the detection head 1' encounters yarn defects including slab and different yarn number to detect change of electric output, the cutter C is configured to activate by the output signal to cut yarn Y.

Generally when the yarn defect is detected, yarn is cut by the cutter C, and the detection head 1' becomes in a state of no yarn because a downstream end of the yarn is taken up by a package P in Fig.2. In this way the electric signal from the light receiving section 3 is used as a yarn quality analytic signal.

The detection head 1' is connected to a control unit 4. The control unit 4 is composed of a microcomputer and provided with an A/D converting section 5, a yarn travel condition judging section 6, a light adjusting section 7 and a projecting voltage instruction value output section 15. Each element is later described in detail.

Generally, the above mentioned yarn clearer 1 operates during yarn traveling time corresponding to time for taking up yarn. In this case the yarn clearer 1 analyzes yarn quality including yarn thickness $\phi$ and fluff size based on light receiving voltage signal input through the A/D converting section 5 in the yarn travel condition judging section 6 to detect yarn defects including abnormal twist application and slab.

Although correction is performed in view of prevention of temperature drift and deterioration of the projection section 2 even during yarn traveling time, the correction is not regarded here because voltage level change involved with the correction is minimum but only correction during yarn travel stop time is regarded. A projection-side driving voltage (x in FIG. 4) is fixed at substantially constant level during yarn traveling time as described next.

In the above mentioned photoelectric type yarn clearer 1, it is adjusted to set the light receiving voltage at the predetermined preset level ($V_0$ in FIG. 4) in the state of yarn travel stop on start-up (reference correction). This yarn travel stop state is set as a reference. The yarn clearer 1 judges yarn travel/stop state and detects yarn defects such as slab and analyzes yarn quality based on unevenness between a change of light receiving voltage with respect to a reference point, or the above mentioned predetermined preset level $V_0$, and a light receiving voltage obtained during yarn travel. In this case, the projection-side driving voltage x is fixed at constant level regardless of yarn travel or stop as in FIG. 4. With regard to this voltage level, the light receiving voltage in the state of yarn stop is to be set at a predetermined preset level $V_0$.

Adjustment of the above mentioned projecting voltage x is performed using the control unit 4 in FIG. 14. After the yarn travel condition judging section 6 judges the yarn travel stop state, the correcting section 8 compares the light receiving voltage level taken in from the A/D converting section 5 with the predetermined preset level $V_0$ previously stored in a preset level storing section 9. Subsequently the level of the projecting voltage x is controlled by the correcting section 8 so that the difference between both may be within the predetermined acceptable range. With this, the light receiving voltage is calibrated to the preset level $V_0$ and the projecting voltage corresponding to it is also fixed by the light adjustment section 7.

The projection-side driving voltage x is decided in such way. And then the LED of the projecting section 2 is driven at the same voltage level in the case of shifting to the yarn travel state.

Therefore, during yarn travel, when LED is driven by the above mentioned constant projection-side driving voltage x to project light toward the received light section, a shadow and reflection light appeared in a photo transistor of the light receiving section 3 changes due to thickness and the like of a traveling yarn between the projecting section 2 and the light receiving section 3 which are opposed to each other, and the light receiving voltage obtained on the received light side is ever changing. The yarn travel condition judging section 6 monitors such light receiving voltage change during yarn travel and observes how different the light receiving voltage during yarn travel is from the reference point or the above mentioned predetermined preset level $V_0$ adjusted in the yarn travel stop state, based on the result of which yarn travel or stop is judged, different yarn number is detected, yarn defect including slab is detected and the yarn defect is analyzed.

In the detection head (clearer head) of the yarn clearer, when a cover glass provided between a projection surface and a receiving light surface or a projection element and a light receiving element facing to each other become dirt, unevenness occurs to a measurement value $\phi$ of yarn clearer despite substantially same thickness of the yarn traveling in each spindle. Therefore there has been a problem of frequent occurrence of wasteful breakage because false detection of presence of defect portion is made by the above mentioned $\phi$ alarm detecting operation.

Besides, despite substantially same thickness of yarn traveling in each spindle, when variation of $\phi$ measurement values in yarn clearers occur, detection of yarn defects including slab and analysis of yarn quality using signals from the light receiving section are not accurately performed, thereby affecting yarn quality more than a little. Therefore there has been a problem that stable supply of high quality yarn package to the market becomes difficult.

Therefore, it is necessary to provide a yarn clearer and a method, (1) which prevent light projecting/receiving surface s from dirt and keep the clearer head operating without defect and (2) which are resistant against dirt on the light projecting/receiving surfaces in principle and capable of accurately measuring and detecting yarn thickness under any diversified environment.

As for the above (1), the following technologies to prevent the light projecting/receiving surfaces of the clearer head from dirt are known:

(i) blowing off by air (Patent Reference 1)
(ii) determining a limit value of allowable warning frequency during the clearing process and issuing a warning in the case of exceeding the allowable limit, that is, continuously recording a measurement value of yarn thickness during the clearing process, obtaining these distribution, and independently establishing responsive limits based on a statistical relation between the measurement value distribution and the preset allowable warning frequency (Patent Reference 2).

In Patent Reference 1, compressed air is constantly sprayed around the detection head 1' immediately before the process of reference point correction to blow off and remove foreign objects and dirt deposited in the detection head 1', so that the state of the detection head 1' with foreign objects and dirt left is prevented (numeral references in FIG. 14 are used) . This compressed air is configured to spray through a cleaning nozzle 19 and a valve 18 controlled by a valve control section 17 of other controller but that of the yarn clearer 1.

However it is unknown whether foreign objects and dirt are actually removed with the foregoing configuration or not. For example with regard to dirt of the detection head 1' firmly adhered to a glass surface between light projecting/ receiving elements opposed to each other, it can not be easily removed by means as the above mentioned air spray. In this case, the device often continues to operate while the glass surface is adhered with dirt and the like. It is required to provide a technology of detecting the clearer head dirt more quickly and accurately in view of minimizing defects including the above mentioned wasteful breakage. Unless the yarn waste and dirt etc. are securely removed from the detection head 1' even by spraying compressed air, there remains a trouble similar to the foregoing. A basic solution of the problem has not been achieved so far.

And as for the above (2), there has no example of providing a useful device to fully satisfy the needs mentioned in (2).

[Patent Reference 1] Japanese Unexamined Patent Publication No. 10-305967
[Patent Reference 2] Japanese Unexamined Patent Publication No. 3-90639

[Summary of Invention]

[Object of Invention]

Therefore, it is an object of the present invention to provide a detecting system and a method for detecting dirt of a detection head in a yarn clearer, which can detect yarn clearer dirt more quickly and accurately.

[Means to Solve the Object]

As a result of various studies to solve the above problems, the present inventors found the solution of the above problems and achieved the present invention to provide a method for detecting dirt of detection heads in a plurality of yarn clearers, (1) which are mounted on a unit system comprising a plurality of spindles, for monitoring yarn quality and others of each spindle, wherein whether change of yarn thickness data ($\phi$) and/or yarn uniformity data (CV%) obtained based on yarn unevenness signals output from a yarn clearer of a specific spindle is attributed to change of monitored yarn property it self or to dirt of the above mentioned detection head is judged from a relation between yarn thickness data ($\phi$) and/or yarn uniformity data (CV%) obtained based on yarn unevenness signals output from the yarn clearer of the other spindle.

That is, the present invention is the method for detecting dirt of detection heads in a plurality of yarn clearers, (2) which are mounted on a unit system comprising a plurality of spindles, for monitoring yarn quality and others of each spindle comprising steps of:

i) detecting yarn thickness $\phi$ data in each of said spindles;
ii) calculating CV% value in each of said spindles;
iii) calculating $\phi$ unit mean value and CV% unit mean value based on yarn thickness $\phi$ data and CV% value in each of said spindles;
iv) calculating unit overall standard deviation based on said CV% unit mean value;
v) comparing yarn thickness $\phi$ data in each of said spindles with preset first threshold;
vi) calculating unevenness $\sigma$ from said CV% unit mean value of a specific spindle based on CV% value in said specific spindle, CV% unit mean value, and said unit overall standard deviation according to a result of comparison with said first threshold;
vii) further comparing said $\sigma$ value with preset second threshold; and
viii) according to a result of comparison with said second threshold, judging whether yarn number is actually abnormal or the detection head has dirt with regard to said specific spindle, and informing the effect to users.

Further, The present invention is the method for detecting dirt of detection heads in a plurality of yarn clearers, (3) which are mounted on a unit system comprising a plurality of spindles, for monitoring yarn quality and others of each spindle comprising steps of,

i) detecting yarn thickness $\phi$ data in each of said spindles;
ii) calculating $\phi$ unit mean value based on yarn thickness $\phi$ data in each of said spindles;
iii) calculating unit overall standard deviation based on said $\phi$ unit mean value;
iv) comparing said unit overall standard deviation with preset third threshold;
v) according to a result of comparison with said third threshold, recalculating $\phi$ unit mean value and standard deviation based on remaining data excluded of data of the spindle whose yarn thickness $\phi$ value is most different from said $\phi$ unit mean value;
vi) recomparing said recalculated standard deviation with said third threshold;
vii) according to a result of comparison with said third threshold, repeating recalculation of said step v); and
viii) according to a result of comparison and recomparison with said third threshold, judging the detection head has dirt with regard to one or more spindles finally excluded from the calculation and informing the effect to users.

While, the present invention is the method for detecting dirt of detection heads in a plurality of yarn clearers, (4) which are mounted on a unit system comprising a plurality of spindles, for monitoring yarn quality and others of each spindle comprising steps of:

i) monitoring hairiness data HD in each of said spindles and performing HD alarm according to necessity;

ii) calculating CV% value in each of said spindles, CV% unit mean value calculated based on the CV% value in each of said spindles, and unit overall standard deviation calculated based on said CV% unit mean value;

iii) comparing said CV% value with preset fourth threshold with regard to a specific spindle subjected to said HD alarm;

iv) according to a result of the comparison with said fourth threshold, accumulating the number of detections of HD alarms for dirt detection with regard to said specific spindle;

v) repeating said steps i) to iv) ; and

vi) according to a result of said repetition, judging the spindle as a spindle with head dirt and informing the effect to users when the number of HD alarms for dirt detection per unit time finally exceeds the predetermined preset frequency with regard to a given spindle.

Next, the present invention enabling to solve the above mentioned problems is the system for detecting dirt of detection heads in a plurality of yarn clearers, (2)' which are mounted on a unit system comprising a plurality of spindles, for monitoring yarn quality and others, comprising:

i) a φ detecting section connected to light receiving side of each of said spindles and detecting yarn thickness φ data in each of said spindles;

ii) a CV% calculating section also connected to light receiving side of each of said spindles and calculating a CV% value in each of said spindles;

iii) a φ unit mean value calculating section connected to said φ detecting section and calculating unit mean value based on yarn thickness φ data in each of said spindles;

iv) a CV% unit mean value calculating section connected to said CV% calculating section and calculating CV% unit mean value based on CV% value in each of said spindles;

v) a standard deviation calculating section connected to said CV% unit mean value calculating section and calculating a unit overall standard deviation based on said CV% unit mean value; and

vi) a comparing section directly or indirectly connected at least to said φ detecting section, said CV% calculating section, said φ unit mean value calculating section, said CV% unit mean value calculating section, and said standard deviation calculating section and detecting existence of head dirt spindle based on the yarn thickness φ data in each of said spindles, the CV% value in each of said spindles, said φ unit mean value, said CV% unit mean value, said unit overall standard deviation, and a preset first threshold and second threshold.

Or the present invention enabling to solve the above mentioned problems is the system for detecting dirt of detection heads in a Plurality of yarn clearers, (3)' which are mounted on a unit system comprising a plurality of spindles, for monitoring yarn quality and others, comprising:

i) a φ detecting section connected to light receiving side of each of said spindles and detecting yarn thickness φ data in each of said spindles;

ii) a φ unit mean calculating section connected to said φ detecting section and calculating a φ unit mean value based on yarn thickness φ data in each of said spindles;

iii) a standard deviation calculating section connected to said φ unit mean value calculating section and calculating unit overall standard deviation based on said φ unit mean value; and

iv) a comparing section directly or indirectly connected at least to said φ detecting section, said φ unit mean value calculating section, said standard deviation calculating section, and detecting existence of head dirt spindle based on the standard deviation obtained by said standard deviation calculating section and preset third threshold.

Or the present invention enabling to solve the above mentioned problems is the system for detecting dirt of detection heads in a Plurality of yarn clearers, (4)' which are mounted on a unit system comprising a plurality of spindles, for monitoring yarn quality and others, comprising:

i) an HD monitoring section connected to light receiving side of each of said spindle and monitoring hairiness data HD in each of said spindles;

ii) a CV% calculating section connected to light receiving side of each of said spindles and calculating CV% value of each of said spindles;

iii) a CV% unit mean value calculating section connected to said CV% calculating section and calculating CV% unit mean value based on CV% value in each of said spindle;

iv) a standard deviation calculating section connected to said CV% unit mean value calculating section and calculating unit overall standard deviation based on said CV% unit mean value; and

v) a comparing section directly or indirectly connected at least to said HD monitoring section, said CV% calculating section, said CV% unit mean value calculating section, and said standard deviation calculating section and detecting existence of head dirt spindle based on output from said HD monitoring section, the CV% value in each of said spindles, and preset fourth threshold and preset frequency of HD alarms.

In the present invention, the method and system for detecting dirt of detection heads in yarn clearers may be combination of at least two out of the above mentioned (2) to (4) or (2)' to (4)'.

[Explanation of Terms]

As for the term "yarn travel stop state" in this description, recognition of yarn travel stop is generally referred to a state that no yarn unevenness signal (FW signal) from the yarn clearer is detected. That means, because signals output from the yarn clearer based on yarn thickness and fluff (hairiness) constantly change, no yarn travel is judged with no signal change.
In the present invention, "yarn travel stop state" refers to a state of recognition of the fact that yarn travel is not observed regardless of whether deposit, dirt, yarn etc. exist or not in the detection head. This shall include the following states:

i) yarn travel stops with the detection head having no deposit nor dirt,
ii) dirt is adhered to and foreign objects are deposited in the detection head, or
iii) yarn travel is recognized as stop while whether dirt is adhered to or yarn is hung up on the detection head is not sure.
Further in the present invention, "state of dirt adhered to a detection head" shall include:

i) foreign objects such as yarn waste and dirt are adhered to entire or part of the detection head,
ii) yarn is hung up and deposited on the detection head after cutting traveling yarn,
iii) foreign objects such as yarn waste and dirt are completely or partially caught in the detection head, or
iv) foreign objects are placed on the detection head and entire or part of the detection head is covered.

"CV%" represents yarn uniformity rate or variation rate of yarn thick unevenness within a predetermined interval (test length).
With regard to calculation of a CV value, first mean value Va of detected yarn thickness $\phi$ is obtained and then apply this mean value Va to the following formula, as an example.
[Formula 1]

$$CV = \frac{1}{V_a} \times \sqrt{\frac{\sum (V_x - V_a)^2}{N-1}} \times 100\ (\%) \qquad (1)$$

N: number of sampling
$V_x$: measurement value per sample
$V_a$: mean value of n pieces of data

In the above formula (1) N: number of sampling, $V_x$: individual yarn thickness ($\phi$), $V_a$: mean value of yarn thickness $\phi$ of n pieces of data, $\Sigma$ : sum of n pieces of data.
CV% obtained with this formula (1) corresponds to a monitor waveform of yarn thick-unevenness actually detected from the detection head of the yarn clearer as exemplified in FIGs. 4 and 5 described later. With this obtained CV%, variation rate against mean can be obtained with regard to a thickness detection value of yarn for a predetermined interval (test length L) of conducted detection.
"SD" represents a standard deviation of continuous detection values corresponding to traveling yarn thick-unevenness.
This SD is calculated with the following formula and corresponds to the previous value before being divided with the mean in calculation of the above mentioned CV%.
[Formula 2]

$$SD = \sqrt{\frac{\sum \left(V_x - V_a\right)^2}{N-1}} \tag{2}$$

N: number of sampling
$V_x$: measurement value per sample
$V_a$: mean value of n pieces of data

SD obtained with this formula (2) corresponds to change rate (width) of yarn thick-unevenness or change width of monitor waveform of yarn thick-unevenness actually detected from the detection head as exemplified in FIGs. 4 and 5 later described.

[Effect of Invention]

With the present invention, it is possible to provide a method and system for detecting dirt in a detection head of photoelectric type yarn clearer, which can detect the dirt of the yarn clearer head more quickly and accurately. Although a plurality of embodiments are shown below, more than one method out of them may be employed in a single unit of the system mentioned above. In this case, dirt detection performance on the yarn clearer head can be further improved. As mentioned later, there can be the case that φ does not change despite a dirt head. If more than one method are employed together in that case, the detection head can detect dirt more accurately. And it is helpful for safer operation of a unit system.

[The Best Mode for Carrying Out the Claimed Invention]

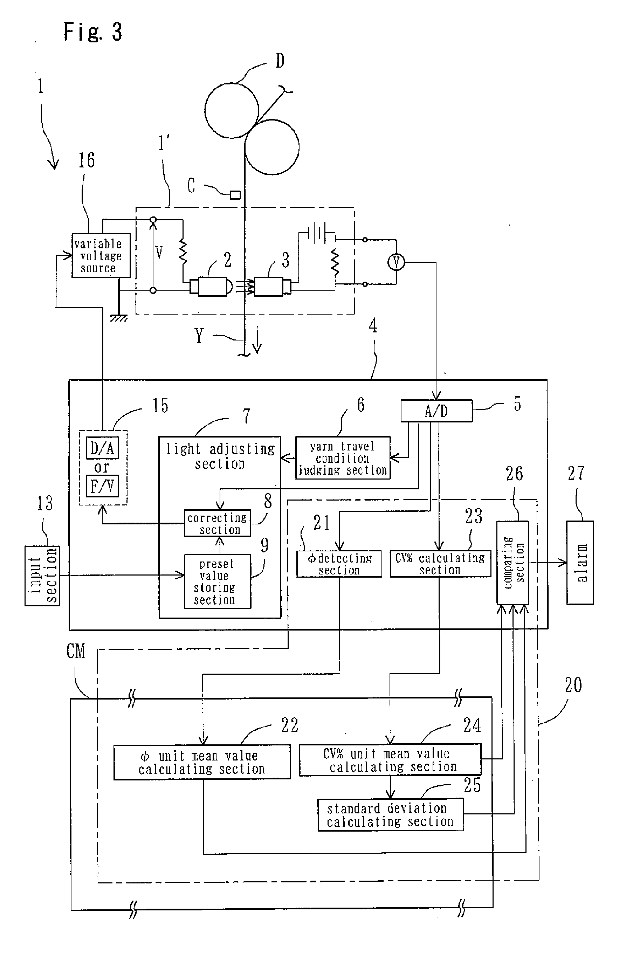

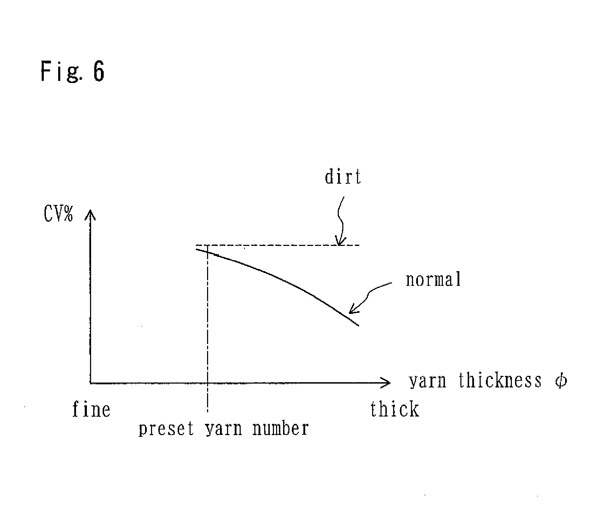

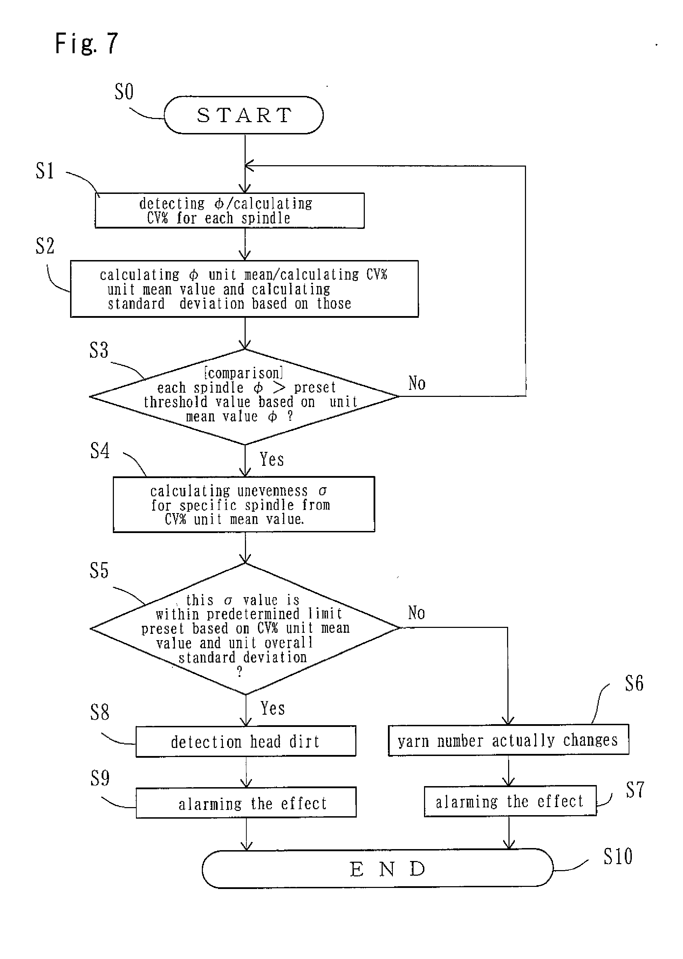

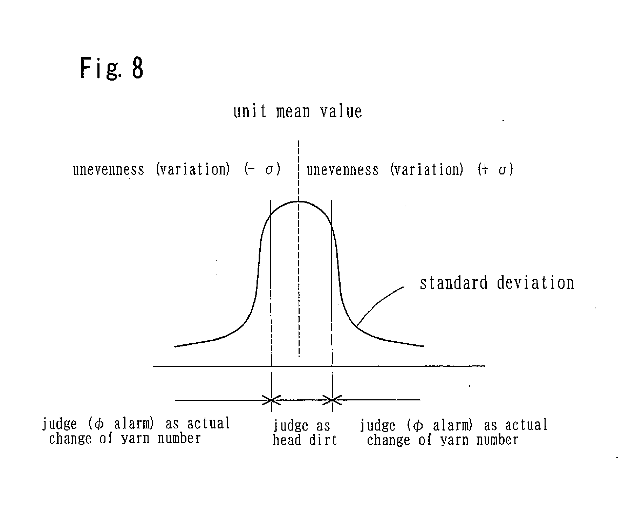

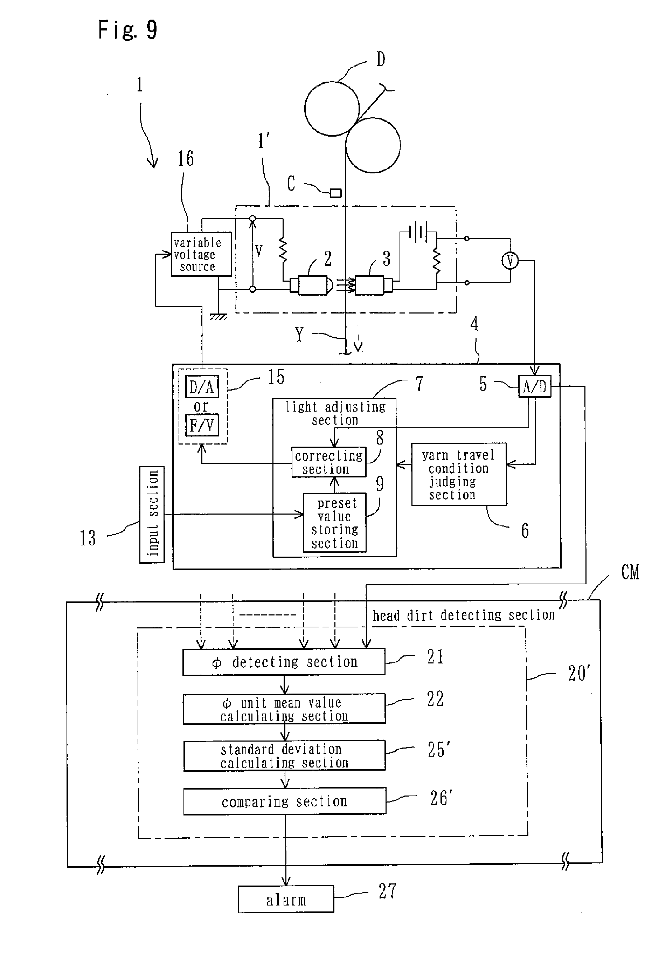

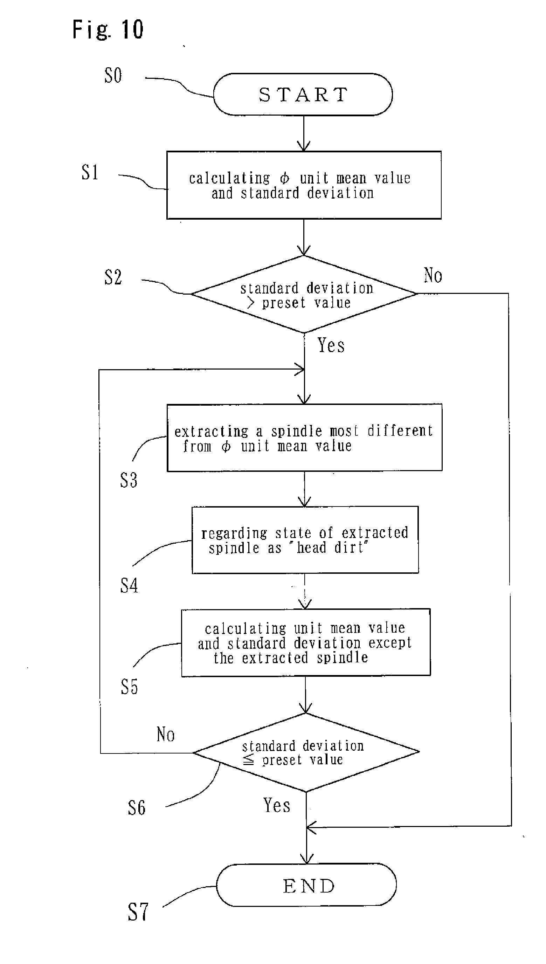

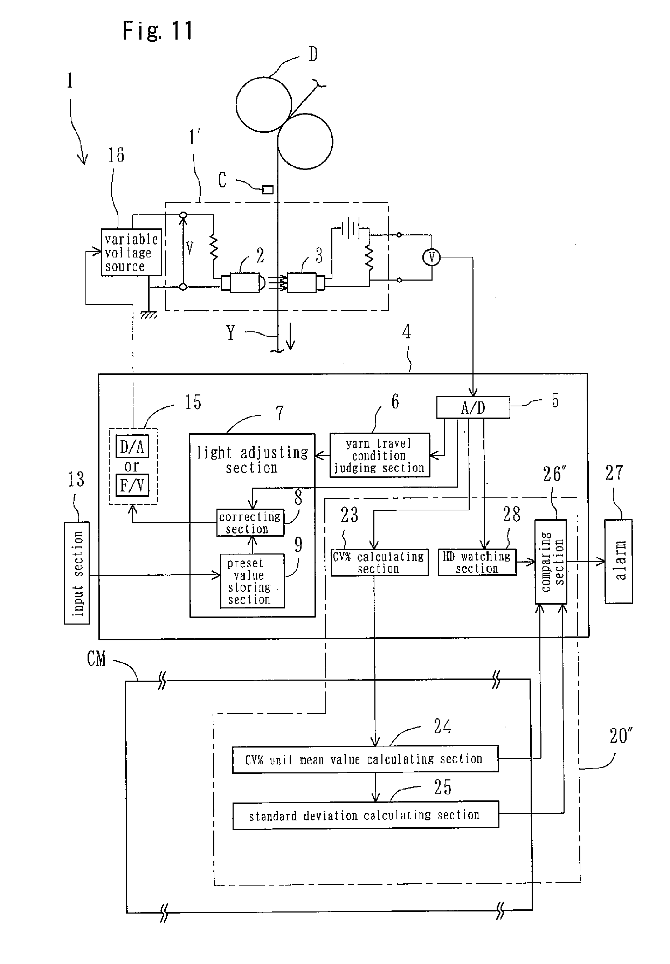

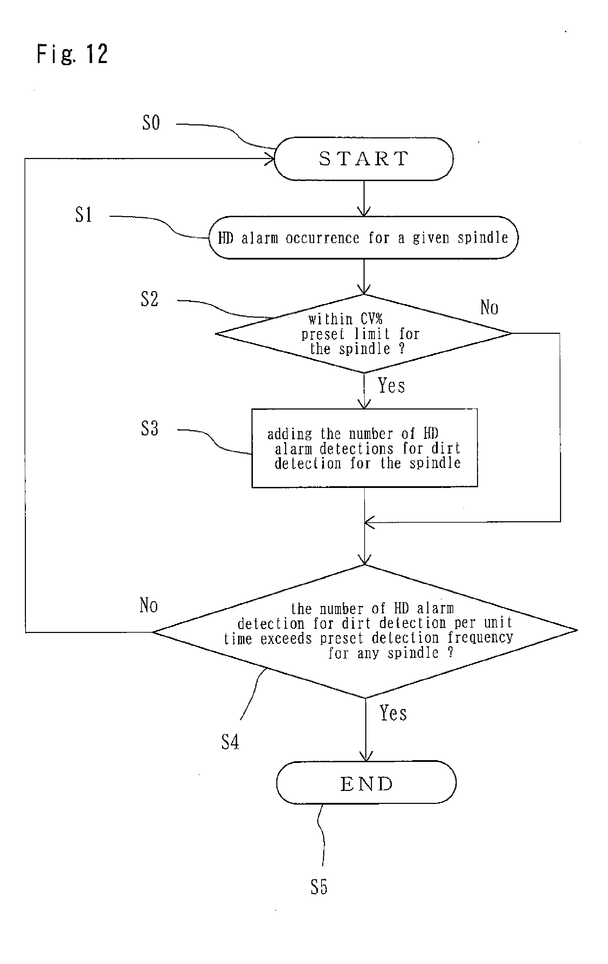

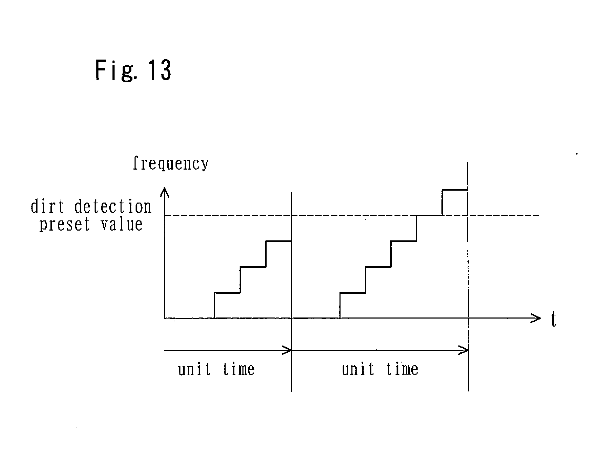

Hereinafter, preferred embodiments of the present invention will be described. FIG. 1 is a diagram showing a configuration example of unit system. FIG. 2 is a diagram showing outline of a spinning machine. FIG. 3 is a diagram showing a configuration example of a control system of a yarn clearer related to a first embodiment of the present invention. FIG. 4 is a diagram showing a relation between projecting voltage and light receiving voltage of the detection head in the yarn clearer. FIG. 5 is a diagram showing an example of yarn unevenness signal observed by the detection head in the yarn clearer. FIG. 6 is a diagram showing a relation between yarn thickness and uniformity (CV%). FIG. 7 is a diagram showing a detection sequence related to the first embodiment of the present invention and an example of a flow chart when a yarn monitoring method of the present invention is performed with the configuration shown in FIG. 3. FIG. 8 is a diagram showing a relation between variation (uneveness) σ from CV% unit mean and threshold. FIG. 9 is a diagram showing a configuration example of a control system of the yarn clearer related to a second embodiment of the present invention. FIG. 10 is a diagram showing a detection sequence related to the second embodiment of the present invention and an example of a flow chart when a yarn monitoring method of the present invention is performed with the configuration shown in FIG. 9. FIG. 11 is a diagram showing a configuration example of a control system of a yarn clearer related to a third embodiment of the present invention. FIG. 12 is a diagram showing a detection sequence related to the third embodiment of the present invention and an example of a flow chart when a yarn monitoring method of the present invention is performed with the configuration shown in FIG. 11. FIG. 13 is a diagram showing a method for detection head dirt in the third embodiment of the present invention. FIG. 14 is a block diagram showing a configuration of conventional photoelectric type yarn clearer. In the explanation below, the same elements shall have the same numeral references.

[First Embodiment]

FIG. 1 shows a configuration example of a control system of a unit system of a spinning machine applied to a method and a system related to the present invention for detecting dirt in a detection head of a photoelectric type yarn clearer. The yarn clearer is provided in front of piecing of a spinning device. In unit system 100 as in FIG. 1, a single unit of yarn clearer monitors and judges four spindles. That means in the configuration of the yarn clearer 1 in the unit system 100 in FIG. 1, four units of detection heads 1' share a single unit of control unit 4. And yarn clearers from No. 1 to No. 20 are provided in the unit system in FIG. 1 and a single unit system ends up handling total 80 spindles. Each yarn clearer is connected to a control master CM. In the control master CM, a unit mean of yarn thickness φ is calculated and a CV% unit mean in each detection head is calculated as mentioned later. In the control master CM itself is connected to an operation data management system VOS for presenting to users information of various data including operation conditions, yarn quality control, operation control and maintenance control.

MSMPC shown in FIG. 1 controls a spinning device of each spindle, controls cutters, and manages packages (constant length).

FIG. 2 shows a portion of one spinning unit 50 out of a plurality of spinning units composing the unit system 100 in the spinning device related to the present invention. The yarn clearer 1 related to this embodiment is provided in a air type spinning machine. The air type spinning machine itself comprises a plurality of spinning units (80 units in this embodiment) arranged at even intervals in a vertical direction of a sheet FIG. 2. The spinning unit 50 is provided with a spinning section 40, the yarn clearer 1 and a take-up section 30 in order from upstream as in FIG. 2. In the configuration of this type spinning machine, an automatic piecing device, not shown, is further provided, and after yarn defective portion detected by the yarn clearer 1 is cut and removed, spun yarn is pieced again so as to be continued to take up.

The spinning section 40 in FIG. 2 is located upstream of the spinning unit 50 and yarn Y is spun out from a sliver (fiber bundle) S. The spinning section 40 is arranged with a draft part 45 comprising a back roller B, a middle roller M, and a front roller F, an air spinning nozzle A, and yarn feed roller D in this order from the sliver S. The middle rollers M are wound with apron E formed of no end rubber belt. Each roller B, M, F respectively comprises an upper top roller and a lower bottom roller and drafts the sliver S. The air spinning nozzle A twists the sliver S output from the front roller F to produce spun yarn Y. Moreover, the yarn feed roller D draws yarn from the spinning nozzle A.

On the other hand, the take-up section 30 is disposed downmost of the spinning unit 50. The take-up section 30 is contacted with pressure to a peripheral surface of the package P to rotation drive the package P to take up the spun yarn Y, and composed of a dram T driven by a motor, not shown.

And the yarn clearer 1 is disposed between the above mentioned spinning section 40 and the take-up section 30 for detecting yarn conditions and removing a defective portion. As mentioned before, the yarn clearer 1 is a photoelectric type yarn monitoring device to detect variation of diameter of yarn Y (yarn thickness $\phi$) spun by each spinning unit 50 and output yarn unevenness signal and the like. A cutter C for cutting yarn Y is provided upstream of the yarn clearer 1. Further a cleaning nozzle 19 is provided near an upper face of the yarn clearer 1. An opening at one end of the cleaning nozzle 19 is arranged so as to face to the upper face of the yarn clearer 1. On the other hand, the onother end of the cleaning nozzle 19 is connected with an air spraying device, not shown. The air spraying device is configured to spray compressed air from the opening at one end of the cleaning nozzle 19 to blow off and remove cotton fly and dirt adhered to the detection head of the yarn clearer 1, foreign objects and dirt including yarn wastes, or yarn Y hung on the yarn clearer 1 following the conventional control method.

Next, the configuration of the yarn clearer 1 related to the present invention is described with reference to FIG. 3. The basic configuration of the yarn clearer is as previously described with reference to FIG. 14 as a prior art.

FIG. 3 shows a configuration of a light projecting/receiving system of the yarn clearer. The light projecting/receiving system of the yarn clearer related to this embodiment is provided with LED on the light projecting side, provided with a light receiving element on the light receiving side, and a glass surface (cover glass), not shown, is provided between the light projecting element and the light receiving element which are facing to each other to prevent the both elements from adhering traveling filament, fluff and the like.

With regard to operation principle which will be below described in detail, basically the light receiving element observes amount of shadow (= amount of receiving light) to monitor and judge thickness ($\phi$) of yarn passing through the detection head 1'.

Next, the details of the yarn clearer shown in FIG. 3 are described hereinafter.

As in FIG. 3, the control unit 4 connected to the detection head 1' is composed of a micro computer and provided with a A/D converting section 5, a yarn travel condition judging section 6, a light adjusting section 7, and a light projecting voltage instruction value output section 15. The light projecting voltage instruction value output section 15 is composed a F/V converting section or a D/A converting section later mentioned. The A/D converting section 5 is connected to the light receiving section 3 of the detection head 1' and has a function to convert analog signals input from the light receiving section 3 to digital signals. The yarn travel condition judging section 6 is connected to the A/D converting section 5 and judges travel or stop of yarn Y by observing light receiving voltage signal from the A/D converting section.

Here, a phototransistor detects minimum changes of yarn thickness (yarn unevenness) during yarn travel to express amplitude in a light receiving voltage waveform (Ref. to FIGs. 4 and 5) . This embodiment is configured to judge travel or stop of yarn Y using this property. More particularly, it it judged as yarn travel if the above mentioned amplitude (yarn unevenness signal) is detected for predetermined time, while it is judged as yarn stop if such amplitude is not detected for the predetermined time.

The light adjusting section 7 composed of a correcting section 8 and a preset value storing section 9. After yarn travel condition judging section 6 judges as yarn stop state, the correcting section 8 have a function to compare light receiving voltage input from A/D converting section 5 to the correcting section 8 with predetermined preset value ($V_0$ in FIG. 4) previously stored in the preset storing section 9 and to calibrate driving signal to the light projecting section 2 to adjust light projecting voltage (x in FIG. 4) (reference pint correction) so that light receiving voltage becomes a preset

value $V_0$ at yarn stop state. The above mentioned predetermined preset value $V_0$ is set 0.1V in this embodiment and previously input from an input section 13 provided outside to the control means 4, and stored. In this embodiment, the input section 13 corresponds to an operation panel of data management system VOS of unit system 100.

This correcting section 8 outputs a value of the projection-side driving voltage x, after reference point correction is performed, to the light projecting voltage instructing section 15.

Here in this embodiment, the correcting section 8 of the light adjusting section 7 is a pulse output section, has a function to output a driving pulse at arbitrary output frequency f, and is connected to the light projecting voltage instructing value output section 15. This is because the light projecting voltage instructing value output section 15 is configured as the F/V converting section.

In this embodiment, the light projecting voltage instructing value output section 15 composed of the F/V converting section and configured to output the voltage signals corresponding to the output frequency f and input to a variable voltage source 16. The variable voltage source 16 is connected to the light projecting section 2 of the detection head 1' and applies voltage corresponding to signals from the light projecting voltage instructing value output section 15 to LED of the light projecting section 2.

As mentioned below, the configuration of light projecting voltage instructing value output section 15 is not limited to this and may be configured as a D/A converter.

Next, a head dirt detecting section 20 of the yarn clearer of this embodiment is described. In this embodiment, the head dirt detecting section 20 is provided for both of the control unit 4 and the control master CM. The head dirt detecting section 20 comprises: a φ detecting section 21 which is connected to light receiving side of each spindle and is input with φ data from the A/D converting section 5 of the control unit 4 connected to each detection head 1' ; a CV% calculating section 23 which is also connected to light receiving side of each spindle and calculate a CV% value in each spindle; a φ unit mean calculating section 22 which is connected to the φ detecting section 21 and calculates a unit mean based on φ data input in the φ detecting section 21 from each spindle; a unit mean calculating section 24 which is connected to the CV% calculating section 23 and calculates CV% unit mean based on CV% in each spindle; a standard deviation calculating section 25 which is connected to the CV% unit mean calculating section 24 and calculates a unit overall standard deviation based on CV% unit mean; a comparing section 26 which is directly or indirectly connected at least to the φ detecting section 21, a φ unit mean calculating section 22, the CV% calculating section 23, the CV% unit mean calculating section 24, and the standard deviation calculating section 25 and detects existence of head dirt spindle based on the φ data input in the φ detecting section 21 from each spindle, the CV% value of each spindle, the φ unit mean value, the CV% unit mean value, the unit overall standard deviation, the preset first threshold and the preset second threshold. And the comparing section 26 is further connected to an alarm 27.

Here, the comparing section 26 as mentioned below is directly or indirectly connected at least to the φ detecting section 21, a φ unit mean calculating section 22, the CV% calculating section 23, the CV% unit mean calculating section 24, and the standard deviation calculating section 25, and proceeds steps of:

i) comparing yarn thickness φ data of each spindle with the preset first threshold;
ii) calculating unevenness σ from unit mean of CV% value of each spindle based on the CV% value in a specific spindle, the CV% unit mean and the unit overall standard deviation, according to a result of comparison with the first threshold;
iii) further comparing the above mentioned value σ with a preset second threshold; and
iv) judging whether yarn number is actually abnormal or the detection head has dirt with regard to the above mentioned specific spindle, according to the result of comparison with the above mentioned second threshold, and informing the effect to users.

Therefore with this embodiment, as mentioned below, the comparing section 26 proceeds steps of: i) judging that the φ value is larger than that of the preset first threshold based on the φ unit mean with regard to a spindle; ii) calculating unevenness σ from the unit mean of CV% value of the spindle based on the CV% value and the CV% unit mean and the unit overall standard deviation in the spindle; iii) further comparing the above mentioned value σ with a preset second threshold, and when the value σ is judged to be within the limit (the second threshold) preset based on the CV% unit mean and the unit overall standard deviation, the comparing 26 instruct the alarm 27 to emit alarm as the detection head of the spindle being adhered with dirt.

In this embodiment, the comparing section 26 is provided with a first storing section and a second storing section together. The first storing section determines a predetermined preset threshold (first threshold) based on the φ unit mean obtained by the φ unit mean calculating section 22 and stores the threshold. The second storing section determines a predetermined preset an upper limit value and a lower limit value (second threshold) based on the CV% unit mean obtained by the CV% unit mean calculating section 24 and the unit overall standard deviation obtained by the standard deviation calculating section 25 and stores the threshold.

Thus the head dirt detection sequence is performed for the detection head 1' of this embodiment through interactions between the control unit 4 and control master CM.

[Operation]

Operation of the yarn clear 1 of this embodiment with the above mentioned configuration is described. As in FIG. 2, the spinning machine starts operation, yarn Y is spun from the spinning section 40 comprising the draft part 45 and the air spinning nozzle A, this yarn Y is sent and taken up to a package P by the take-up section 30 while the yarn clearer 1 detecting conditions of the yarn Y. When this spinning operation stats, in the yarn clearer 1, as shown in FIGs. 4 and 5, a yarn travel/stop state is judged based on output signals from the light receiving element of the detection head 1', analysis of yarn quality including fluff amount starts, and uniformity analysis and judgment of slab and yarn defects are conducted. And in the yarn clearer 1 and the control master CM, detection sequence of detection head dirt as exemplified in FIG. 7 can be carried out.

When the yarn clearer is used for long time, dirt including cotton dust and sand dust from a sliver S is adhered to a glass light receiving surface and the detection head 1' becomes dirt. Then, with signals from the light receiving element 3, yarn thickness appears to increase. The detection sequence mentioned below acts to detect such dirt and inform users at early stage to urge them to address.

The head dirt detection sequence related to the first embodiment of the present invention is continued to describe with reference to a flow chart of FIG. 7 and diagrams showing one example of signals of yarn unevenness observed by the light receiving system of the detection head in the yarn clearer shown in FIGs. 4 and 5.

In the head dirt detection sequence related to FIG. 7, $\phi$ data extracted from each spindle is collected to the control master CM where analysis is performed with respect to each spindle to identify a spindle with a dirt head. Therefore, as in FIG. 3, the judging means related to this first embodiment should be provided to each spindle of the unit system 100 and the control master CM entirely.

First, the light projecting/receiving system in the ordinary conditions is described. In this embodiment, reference point correction is performed at appropriate intervals so that in basic LED output on projection side, a light receiving level is set to be 0.1V in the state of broken yarn, as shown on left end of FIG. 5 (A) to (C). Thickness $\phi$ (mean value) of the traveling filament is grasped by obtaining mean level of yarn unevenness signals obtained in the light receiving element 3 as shown in FIG. 5. A swing width of yarn unevenness signals changes according to existence or degree of fluff.

In this embodiment, the light receiving element 3 of each spindle observes shadow amount (= corresponding to received light amount) to monitor and judge thickness $\phi$ of yarn passing the detection head 1'. And in this embodiment, a reference value of the signal level for given yarn thickness is stored in the first storing section as predetermined threshold (the first threshold) preset based on the $\phi$ unit mean. When the measured $\phi$ data value is larger than the preset first threshold based on the $\phi$ unit mean, in order to judge with regard to the spindle, whether i) the yarn number actually changes or ii) detection head is dirty is further judged, i) unevenness $\sigma$ from the unit mean of CV% value of the spindle is calculated based on the CV% value of each spindle, the CV% unit mean, and the unit overall standard deviation obtained from this CV% unit mean, ii) this $\sigma$ value is compared to see within a predetermined upper limit value and lower limit value (the second threshold) preset based on the CV% unit mean and the unit overall standard deviation. In this embodiment, whether i) the yarn number actually changes or ii) the detection head is dirty is judged according to the result.

Particularly, after a yarn thickness $\phi$ of each spindle in the yarn clearer 1 is first detected (S1), a $\phi$ unit mean is calculated in the control master CM using those values (S2). In this embodiment, yarn thickness $\phi$ is obtained in the form of voltage value from the A/D converting section 5 in the control unit 4 connected to the light receiving element 3. And in this embodiment, Step S1 is executed by the $\phi$ detecting section 21, and Step S2 is executed by the $\phi$ unit mean calculating section 22.

In this embodiment, in Step S1 and Step S2 as mentioned below, CV% of each spindle is calculated (Step S1), CV% unit mean value, and unit overall standard deviation based on the mean value is calculated (Step 2) in parallel. The CV% calculation of Step S1 is executed by the CV% calculating section 23 and the calculation of CV% unit mean value of Step S2 is executed by CV% unit mean value calculating section 24, and the calculation of standard deviation obtained based on the mean value is executed by the standard deviation calculating section 25.

Next, the yarn thickness value $\phi$ of each spindle detected in Step S1 is compared with the first threshold preset based on the $\phi$ unit mean value in Step 2 (S3). This Step 3 is executed by the comparing section 26 using the first threshold stored in the first storing section.

When the detection head 1' is left dirt, with regard to a signal output from the light receiving element 3, i) the signal level of the mean thickness increases and ii) the signal level of yarn unevenness increases even though the traveling yarn has the same yarn number (Ref. to FIG. 5). With the conventional art, when both levels increase, i) yarn defect appears or ii) a $\phi$ alarm is emitted to users because the yarn number is considered to be different.

In this embodiment, it is detected using a CV% value of each spindle mentioned below, whether i) the yarn number actually changes or ii) the head is simply dirty.

In this embodiment, calculation is conducted based on the CV% value of each spindle, the CV% unit mean and the unit overall standard deviation obtained from this CV% value and comparison is conducted with unevenness σ from CV% unit mean value of the specific spindle. The upper and lower limits (the second threshold) of the range preset based on the unit overall standard deviation obtained from this CV% value are stored in the second storing section in the comparing section 26.

Here the relation between yarn thickness and uniformity (CV%) used in the present invention is described with reference to FIGs. 5 and 6.

i) When a head is not dirt on the ordinary condition and the yarn hung has larger yarn number than predetermined one, a signal level of yarn uneven portion showing amount of yarn fluff does not change (ref. to FIG. 5B), thereby a CV% value decrease (ref. to FIG. 6). On the contrary, since the amount of yarn fluff does not change despite the yarn hung has small yarn number, a CV% value increases.

A Y axis in FIG. 5 represents light receiving voltage as mentioned above, the received light amount decreases because the shadow size increases, as the yarn thickness increases. Notwithstanding, the received light amount appears to increase in FIG. 5 on the contrary. This is because of an intentional operation purposed to process voltage for easy understanding.

ii) In the case that a head is dirt and the light receiving element measures yarn thickness ϕ as "thicker" than actual one despite the same yarn thickness ϕ of same yarn number, the signal level of yarn unevenness showing fluff amount increases according to detected thickness degree (ref. to FIG. 5A). Therefore, the CV% value does not change (ref. to FIG. 6).

Thus, the CV% value empirically decrease as yarn thickness increases in a relation between yarn thickness and uniformity (CV%) . However, when the head becomes dirt, the CV% value does not change because yarn thickness changes in proportion as apparent yarn thickness changes (CV% = change rate/mean thickness).

When yarn travels while being hung on a yarn clearer in a state of dirty head, it is detected that signal level of the yarn uneven portion showing fluff amount increases overall as well as yarn thickness value ϕ increases overall. The reason is considered to be that output level from the projection side changes and increases overall when output from the light receiving element is corrected so as to be in a preset constant level, or reference point correction is conducted, in a yarn stop state at a predetermined timing.

In this embodiment, with regard to output level change of signal from the light receiving element, judged is whether i) the yarn number actually changes, or ii) the head is simply dirty, using the above mentioned property.

That means, as a result of the comparison in Step S3, when the yarn thickness value ϕ of the specific spindle is judged to be larger than the first threshold, next, unevenness σ from the unit mean of CV% value of the specific spindle is calculated based on the CV% value of each spindle, the CV% unit mean and the unit overall standard deviation obtained from this CV% value unit mean (S4) . This Step 4 is executed by the comparing section 26.

And when the result of the comparison in Step 3 is judged No, there is no possibility of different yarn number or dirty head, and again detection/calculation in Step S1 and S2 are repeated.

And then, the value σ obtained in Step 4 is compared to see within a predetermined range of upper limit value and lower limit value (the second threshold) preset based on the CV% unit mean and the unit overall standard deviation obtained from this CV% unit mean. This Step 5 is also executed by the comparing section 26 using the upper/lower limit (the second threshold) stored in the second storing section in the comparing section 26.

As a result, when this σ value is not within the upper/lower limit and judged No, the yarn number actually changes and therefore the effect is warned to users with alarm (S6, S7).

On the contrary, when the CV% value does not change and is judged Yes, the head is to be dirty and therefore the effect is warned to users with alarm (S8, S9).

With regard to the subsequent steps after Step S5, the relation between unevenness σ from CV% unit mean and threshold is shown in FIG. 8 as a reference.

In this embodiment, as in the foregoing manner, output level change from the light receiving element judges whether i) the yarn number actually changes or ii) the head is simply dirty.

Next, the second embodiment of the present invention is described. The basic configuration of the unit system and the signal conditions and the like of yarn thickness and yarn unevenness obtained in this system are same as described in the first embodiment.

FIG. 9 is a diagram showing a configuration of a yarn clearer related to the second embodiment of the present invention. FIG. 10 is a diagram showing a detection sequence of the head dirt related to the second embodiment of the present invention. The sequence related to FIG. 10, ϕ data is extracted from each spindle and collected in the control master CM and analyzed to identify the spindle with head dirt by calculation.

The method related to the second embodiment related to the present invention is a judging method employing indicator of unevenness (deviation) among a plurality of spindles provided in a single unit system and outlined as below. This judgment may be executed by the control master CM as mentioned above. Therefore, one set of this judging method prepared is enough for one unit system.

First, a head dirt detecting section 20' of a yarn monitoring system related to this embodiment is described with reference to FIG. 9. In this embodiment, the head dirt detecting section 20' is provided in a control master CM. The head dirt detecting section 20' comprises: a $\phi$ detecting section 21 which is connected to light receiving side of each spindle and is input with $\phi$ data from an A/D converting section 5 of a control unit 4 connected to each detection head 1' ; a $\phi$ unit mean calculating section 22 which is connected to the $\phi$ detecting section 21 and calculates a $\phi$ unit mean based on $\phi$ data input in the $\phi$ detecting section 21 from each spindle; a standard deviation calculating section 25' which is connected to the $\phi$ unit mean calculating section 22 and calculates a unit overall standard deviation SD based on the obtained $\phi$ unit mean; a third storing section stores in the next comparing section 26' a predetermined preset value (third threshold) set based on the standard deviation obtained by the standard deviation calculating section 25'; and a comparing section 26' which is directly or indirectly connected at least to the $\phi$ detecting section 21, the $\phi$ unit mean calculating section 22, and the standard deviation calculating section 25' and detects existence of head dirt spindle based on the standard deviation obtained by the standard deviation calculating section 25' and the third threshold in the third storing section. The comparing section 26' is further connected to an alarm 27.

Here, the comparing section 26' is connected to the standard deviation calculating section 25' as mentioned below, and performs steps of:

i) comparing the unit overall standard deviation with the third threshold;
ii) according to the result, recalculating $\phi$ unit mean value and a standard deviation based on remaining data excluded of data of the spindle whose yarn thickness $\phi$ value is most different from the above mentioned $\phi$ unit mean value;
iii) recomparing the standard deviation as calculated above with the third threshold; and
iv) repeating the above step ii) according to the result; and
v) according to the above mentioned comparison and recomparison with the third threshold, judging that one or more spindles excluded from the final calculation are spindle with head dirt and informing the effect to users.

Subsequently, the detection sequence of spindle having head dirt related to the second embodiment of the present invention is described with reference to FIG. 9 and 10.

First, $\phi$ data measured for each spindle is collected in a control master CM, and then the $\phi$ unit mean and unevenness among spindles in the unit overall (S0, S1 in FIG. 10). These steps S0, S1 are executed by the $\phi$ unit mean calculating section 22 and the standard deviation calculating section 25' . In this embodiment, the standard deviation SD is used as an indicator of unevenness among spindles.

When this standard deviation value is larger than the predetermined preset value (the third threshold), it is judged in this embodiment that there are spindles with head dirt in the unit (S2) . This step S2 is executed by the comparing section 26'using the standard deviation SD obtained by the standard deviation calculating section 25' and the third threshold stored in the third storing section. In Step S2, when the standard deviation is smaller than the third threshold, it is judged that there is no spindles with head dirt in this unit and the sequence to find spindles with head dirt related to this embodiment is completed (S7).

In Step S2, when the standard deviation value is larger than the third threshold, the yarn thickness $\phi$ measured in each spindle and the $\phi$ unit mean calculated before are compared and the spindle whose value is most different from the $\phi$ unit mean is extracted in calculation (S3).

In this embodiment, the spindle state extracted here is regarded as "head dirt" and spindles are excluded in descending order of difference from the unit mean with respect to $\phi$ value, and then the $\phi$ unit mean and unevenness among spindles in the unit overall are recalculated (S4, S5) . Step S3 and Step S4 are executed by the comparing section 26' and Step S5 is executed by the $\phi$ unit mean calculating section 22 and the standard deviation calculating section 25'.

Thus, in this embodiment, the spindle having big difference from the $\phi$ unit mean value is judged as "spindle with head dirt" and the spindle is excluded from the calculation of the $\phi$ unit mean and the unit overall standard deviation.

When the standard deviation calculated after the above mentioned exclusion is still larger than the third threshold (the result of Step S6 is No), the spindle having the second biggest difference in $\phi$ value from the unit mean is also judged as "spindle with head dirt" (repetition of S3 and S4), the spindle is excluded from the calculation of the $\phi$ unit mean and the unit overall standard deviation, and the standard deviation is newly recalculated (repetition of S5 and S6) . This step S6 is executed by the comparing section 26'.

Thus, spindles having big different $\phi$ value from the unit mean are excluded until the standard deviation becomes smaller than the predetermined preset value (the third threshold) (repetition of Steps S3 to S6).

When the standard deviation finally becomes smaller than the third threshold (the result of Step S6 is Yes), the sequence to seek spindles with head dirt is completed (S7). According to the method related to this embodiment, one or more spindles excluded from the calculation by the completion of the sequence are judged as "spindles with head dirt". The effect that these spindles excluded from the calculation have head dirt is informed to users from the comparing section 26' through the alarm 27.

[Third Embodiment]

Further, the third embodiment of the present invention is described. The basic configuration of the unit system and the signal conditions and the like of yarn thickness and yarn unevenness obtained in this system are same as described in the first embodiment.

FIG. 11 is a diagram showing a configuration of a yarn clearer related to the third embodiment of the present invention. FIG. 12 is a diagram showing a detection sequence of the spindle with head dirt related to the third embodiment of the present invention. FIG. 13 is a diagram showing a method for detection head dirt related to the third embodiment of the present invention. The sequence related to FIG. 12, CV% data in each spindle is collected in the control master CM, and analyzed and compared on the basis of the calculation value to identify the spindle with head dirt.

The third embodiment of the present invention is a judgment method employing an indicator called HD. HD is one of indictors called hairiness (fluff) data expressing yarn quality and indicates data for given length from the period yarn is hung. In this embodiment, spindle with head dirt is identified by observing two indicators of i) HD alarm frequency and ii) CV% value.

The third embodiment of the present invention is outlined. With regard to the spindle in which i) HD alarms (or cut due to the alarm) occur more often than preset frequency within given unit time and ii) the CV% value of the spindle is within the predetermined range of upper limit/lower limit (fourth threshold) preset based on CV% unit mean and unit overall standard deviation obtained from this CV% unit mean, the spindle is judged as a spindle with head dirt and head cleaning by the operator is requested.

Next, a head dirt detecting section 20" of a yarn monitoring system related to this embodiment is described with reference to FIG. 10. In this embodiment, the head dirt detecting section 20" is also provided for enquiries of the control system 4 and the control master CM. The head dirt detecting section 20" comprises: an HD monitoring section 28 which is connected to light receiving side of each spindle and monitors an indicator HD of each spindle from φ data from an A/D converting section 5 of a control unit 4 connected to each detection head 1'; a CV% calculating section 23 which is connected to light receiving side of each spindle and calculates CV% value of each spindle; a CV% unit mean calculating section 24 which is connected to the CV% calculating section 23 and calculates CV% unit mean value based on CV% value of each spindle; a standard deviation calculating section 25 which is connected to the CV% unit mean calculating section 24 and calculates a unit overall standard deviation SD based on the CV% unit mean; and a comparing section 26" which is directly or indirectly connected at least to the HD monitoring section 28, the CV% calculating section 23, the CV% unit mean calculating section 24, and the standard deviation calculating section 25 and detects existence of head dirt spindle based on output from the HD monitoring section 28, the CV% value of each spindle, and the preset fourth threshold and the preset frequency of HD alarm. The comparing section 26" is further connected to an alarm 27. Here, the comparing section 26" is directly connected to the HD monitoring section 28, the CV% unit mean calculating section 24, and the standard deviation calculating section 25 as mentioned below and performs steps of:

i) comparing the CV% value with the fourth threshold for the specific spindle HD-alarmed through HD monitoring section 28;

ii) according to the comparison result, accumulating the number of detections of HD alarms for detecting dirt with respect to the spindle;

iii) repeating the above steps i) and ii) ; and

iv) according to the above repetition, judging the spindle as a spindle with head dirt and informing the effect to users when the number of HD alarms per unit time for detecting dirt with respect to the spindle finally exceeds the above.

In this embodiment, the preset forth threshold and the predetermined preset frequency are stored in the comparing section 26".

Subsequently, the detection sequence of spindle with head dirt related to the third embodiment of the present invention is described with reference to FIG. 11 and 12. First, operation of the spinning unit starts and yarn travels and passes a detection head, and then HD alarm is emitted for a given spindle through the HD monitoring section 28 (S0, S1 in FIG. 11). Next whether CV% measurement value of the spindle is within the preset limit (the fourth threshold) or not is judged (S2).

In this embodiment, this fourth threshold is preset based on the CV% unit mean and the unit overall standard deviation obtained from this CV% unit mean and is stored in the comparing section 26".

Step S1 is executed by the HD monitoring section 28 and Step 2 is executed by the comparing section 26". CV% value of the specific spindle is calculated by the CV% calculating section 23.

When the judgment result of Step S2 is No, the spindle is regarded as a spindle with no head dirt, the sequence is completed, the sequence is returned to the beginning, and HD alarm occurence is monitored by the HD monitoring section 28 (S1).

And when the judgment result of Step 2 is No, addition of the number of HD alarm detection for dirt detection of Step S3 is skipped. For this reason, a judgment process related to Step 4 is also skipped and a process is performed in assumption of No with regard to the result of Step S4.

On the other hand, when the judgment result is Yes, the number of HD alarm detection for dirt detection is added (S3) to proceed to a judgment process related to the next step S4. Step S3 is executed interior of the comparing section 26".

In Step S4 after addition in Step S3, whether or not the number of HD alarm detection for dirt detection per unit time for a given spindle exceeds the preset frequency is judged (ref. to FIG. 13). When the result of Step 4 is No, a process returned to the beginning to monitor HD alarm occurrence (S1).

The above mentioned preset frequency value and the preset value are also stored in the comparing section 26".

As in FIG. 13, the head dirt spindle detection sequence related to this embodiment is executed every time an HD alarm occurs after the spinning device starts operation and the number of detections in Step S3 are accumulated.

Therefore, this sequence is executed several times, the number of detections in Step S3 are accumulated and recorded interior of the comparing section 26".

When the result of Step S4 is Yes, that means, when the number of HD alarm detections for dirt detection per unit time finally exceeds the preset frequency value, the spindle is judged as a spindle with head dirt and head cleaning by operators is requested and this sequence is finished (S5) . The effect that the spindle having the number of HD alarm detections for dirt detection per unit time exceeding the preset frequency value is a spindle with head dirt is informed to users from the comparing section 26" through the alarm 27.

Frequent occurrences of these HD alarms or cuts within unit time is considered because of frequent occurrences of wasteful cuts due to error detection related to HD in one example.

Thus, according to the present invention exemplified by the first embodiment to the third embodiment as previously mentioned, for example, it is possible to quickly and securely detect the dirt of the detection head in such that the dirt is firmly adhered to a glass surface between the light projecting/receiving elements and can not be removed by means such as air spray but can be removed only by an alcohol-soaked cotton swab and the like.

[Modified Example]

Although preferred embodiments of the present invention are described above in detail with reference to attached drawings, the present invention shall not be limited to the above configuration and others at all and various modifications are possible. For example, the method or the system of the present invention for detecting dirt of the detection head in the photoelectric type yarn clearer may be a combination of two or more of the first embodiment to the third embodiment, which can further improve dirt detection performance of the detection head.

The number of detection heads mounted per a single unit of yarn clearer is not limited to the above. And the number of yarn clearers mounted per a single unit system is also same.

And in each of the above mentioned embodiments, the method and the system of the present invention for detecting dirt of the detection head in the photoelectric type yarn clearer is applied to the spinning machine provided with the air type spinning section. However, subject to be applied is not limited to such spinning machine, but the present invention can be applied to ones provided with various type spinning sections except for air type, and textile machines such as an automatic winder and a stranding machine.

In each of the above mentioned embodiments, it is configured that the light projecting voltage instruction output section 15 is the F/V converting section to output the driving voltage corresponding to output frequency f of the driving pulse to the variable voltage source 16. However the light projecting voltage instruction output section 15 is not limited to this configuration. That means, as shown in FIGs. 3, 9, 11 and 14, the light projecting voltage instruction output section 15 may be formed as e.g. D/A converter. In this case, the correcting section 8 of the light adjusting section 7 is formed as a counter of microcomputer.

In the case that the light projecting voltage instruction output section 15 is formed as D/A converter, the correcting section 8 changes output signals by not shown clock signals and data (counter value) corresponding to desired light projecting voltage input in the counter according to the result of the reference point correction and send them out to the light projecting voltage instruction output section 15. In the light projecting voltage instruction output section 15, output signals made out in the correcting section 8 are subject to D/A conversion and sent out to the variable voltage source 16. The variable voltage source 16 increases or decreases LED emission amount of the light projecting section 2 based on the signals output form the light projecting voltage instruction output section 15.

Further in each of the above embodiments, alarm is emitted to users when the spindle is judged as a spindle with head dirt. However the treatment is not limited to this, for example, the spinning unit 50 may be shutdown.

Furthermore, treatment may be in combination with cleaning utilizing a compressed air valve and the like.

Thus, it is clear that the present invention provides a novel and useful method and system for detecting dirt of a detection head in a yarn clearer.

[Brief Description of Drawing]

FIG. 1 is a diagram showing one configuration example of unit system.

FIG. 2 is a diagram showing outline of a spinning machine.

FIG. 3 is a diagram showing one configuration example of a control system of a yarn clearer related to a first embodiment of the present invention.

FIG. 4 is a diagram showing a relation between light projecting voltage and light receiving voltage of the detection head in the yarn clearer.

FIG. 5 is a diagram showing an example of yarn unevenness signals observed by the detection head in the yarn clearer.

FIG. 6 is a diagram showing a relation between yarn thickness and uniformity (CV%).

FIG. 7 is a diagram showing a detection sequence related to the first embodiment of the present invention and an example of a flow chart when a yarn monitoring method of the present invention is performed with the configuration shown in FIG. 3.

FIG. 8 is a diagram showing a relation between variation σ from CV% unit mean value and threshold.

FIG. 9 is a diagram showing one configuration example of the control system of the yarn clearer related to a second embodiment of the present invention.

FIG. 10 is a diagram showing a detection sequence related to the second embodiment of the present invention and an example of a flow chart when a yarn monitoring method of the present invention is performed with the configuration shown in FIG. 9.

FIG. 11 is a diagram showing one configuration example of the control system of the yarn clearer related to a third embodiment of the present invention.

FIG. 12 is a diagram showing a detection sequence related to the third embodiment of the present invention and an example of a flow chart when a yarn monitoring method of the present invention is performed with the configuration shown in FIG. 11.

FIG. 13 is a diagram showing a method for detection head dirt in the third embodiment of the present invention.

FIG. 14 is a block diagram showing a configuration of conventional photoelectric type yarn clearer.

## Claims

1. A method for detecting dirt of detection heads in a plurality of yarn clearers, which are mounted on a unit system comprising a plurality of spindles, for monitoring yarn quality and others of each spindle, wherein whether change of yarn thickness data ($\phi$) and/or yarn uniformity data (CV%) obtained based on yarn unevenness signals output from a yarn clearer of a specific spindle is attributed to change of monitored yarn inherent property or to dirt of the above mentioned detection head is judged from a relation between yarn thickness data ($\phi$) and/or yarn uniformity data (CV%) obtained based on yarn unevenness signals output from the yarn clearer of the other spindle.

2. A method for detecting dirt of detection heads in a plurality of yarn clearers, which are mounted on a unit system comprising a plurality of spindles, for monitoring yarn quality and others of each spindle comprising steps of:

   i) detecting yarn thickness $\phi$ data in each of said spindles;
   ii) calculating CV% value in each of said spindles;
   iii) calculating $\phi$ unit mean value and CV% unit mean value based on yarn thickness $\phi$ data and CV% value in each of said spindles;
   iv) calculating unit overall standard deviation based on said CV% unit mean value;
   v) comparing yarn thickness $\phi$ data in each of said spindles with preset first threshold;
   vi) calculating unevenness σ from said CV% unit mean value of a specific spindle based on CV% value in said specific spindle, CV% unit mean value, and said unit overall standard deviation according to a result of comparison with said first threshold;
   vii) further comparing said σ value with preset second threshold; and
   viii) according to a result of comparison with said second threshold, judging whether yarn number is actually abnormal or the detection head has dirt with regard to said specific spindle, and informing the effect to users.

3. A method for detecting dirt of detection heads in a plurality of yarn clearers, which are mounted on a unit system comprising a plurality of spindles, for monitoring yarn quality and others of each spindle comprising steps of,

   i) detecting yarn thickness $\phi$ data in each of said spindles;
   ii) calculating $\phi$ unit mean value based on yarn thickness $\phi$ data in each of said spindles;

iii) calculating unit overall standard deviation based on said $\phi$ unit mean value;

iv) comparing said unit overall standard deviation with preset third threshold;

v) according to a result of comparison with said third threshold, recalculating $\phi$ unit mean value and standard deviation based on remaining data excluded of data of the spindle whose yarn thickness $\phi$ value is most different from said $\phi$ unit mean value;

vi) recomparing said recalculated standard deviation with said third threshold;

vii) according to a result of comparison with said third threshold, repeating recalculation of said step v); and

viii) according to a result of comparison and recomparison with said third threshold, judging the detection head has dirt with regard to one or more spindles finally excluded from the calculation and informing the effect to users.

4. A method for detecting dirt of detection heads in a plurality of yarn clearers, which are mounted on a unit system comprising a plurality of spindles, for monitoring yarn quality and others of each spindle comprising steps of:

i) monitoring hairiness data HD in each of said spindles and performing HD alarm according to necessity;

ii) calculating CV% value in each of said spindles, CV% unit mean value calculated based on the CV% value in each of said spindles, and unit overall standard deviation calculated based on said CV% unit mean value;

iii) comparing said CV% value with preset fourth threshold with regard to a specific spindle subjected to said HD alarm;

iv) according to a result of the comparison with said fourth threshold, accumulating the number of detections of HD alarms for dirt detection with regard to said specific spindle;

v) repeating said steps i) to iv) ; and

vi) according to a result of said repetition, judging the spindle as a spindle with head dirt and informing the effect to users when the number of HD alarms for dirt detection per unit time finally exceeds the predetermined preset frequency with regard to a given spindle.

5. The system for detecting dirt of detection heads in a plurality of yarn clearers, which are mounted on a unit system comprising a plurality of spindles, for monitoring yarn quality and others, wherein at least two controlling methods out of methods described in claims 2 to 4 are included and respective execution results of each controlling method are combined to judge whether the specific spindle is a spindle with head dirt or not.

6. A system for detecting dirt of detection heads in a plurality of yarn clearers, which are mounted on a unit system comprising a plurality of spindles, for monitoring yarn quality and others, comprising:

i) a $\phi$ detecting section connected to light receiving side of each of said spindles and detecting yarn thickness $\phi$ data in each of said spindles;

ii) a CV% calculating section also connected to light receiving side of each of said spindles and calculating a CV% value in each of said spindles;

iii) a $\phi$ unit mean value calculating section connected to said $\phi$ detecting section and calculating unit mean value based on yarn thickness $\phi$ data in each of said spindles;

iv) a CV% unit mean value calculating section connected to said CV% calculating section and calculating CV% unit mean value based on CV% value in each of said spindles;

v) a standard deviation calculating section connected to said CV% unit mean value calculating section and calculating a unit overall standard deviation based on said CV% unit mean value; and

vi) a comparing section directly or indirectly connected at least to said $\phi$ detecting section, said CV% calculating section, said $\phi$ unit mean value calculating section, said CV% unit mean value calculating section, and said standard deviation calculating section and detecting existence of head dirt spindle based on the yarn thickness $\phi$ data in each of said spindles, the CV% value in each of said spindles, said $\phi$ unit mean value, said CV% unit mean value, said unit overall standard deviation, and a preset first threshold and second threshold.

7. A system for detecting dirt of detection heads in a Plurality of yarn clearers, which are mounted on a unit system comprising a plurality of spindles, for monitoring yarn quality and others, comprising:

i) a $\phi$ detecting section connected to light receiving side of each of said spindles and detecting yarn thickness $\phi$ data in each of said spindles;

ii) a $\phi$ unit mean calculating section connected to said $\phi$ detecting section and calculating a $\phi$ unit mean value based on yarn thickness $\phi$ data in each of said spindles;

iii) a standard deviation calculating section connected to said $\phi$ unit mean value calculating section and calculating unit overall standard deviation based on said $\phi$ unit mean value; and

iv) a comparing section directly or indirectly connected at least to said $\phi$ detecting section, said $\phi$ unit mean value calculating section, said standard deviation calculating section, and detecting existence of head dirt spindle based on the standard deviation obtained by said standard deviation calculating section and preset third threshold.

**8.** A system for detecting dirt of detection heads in a Plurality of yarn clearers, which are mounted on a unit system comprising a plurality of spindles, for monitoring yarn quality and others, comprising:

i) an HD monitoring section connected to light receiving side of each of said spindle and monitoring hairiness data HD in each of said spindles;

ii) a CV% calculating section connected to light receiving side of each of said spindles and calculating CV% value of each of said spindles;

iii) a CV% unit mean value calculating section connected to said CV% calculating section and calculating CV% unit mean value based on CV% value in each of said spindle;

iv) a standard deviation calculating section connected to said CV% unit mean value calculating section and calculating unit overall standard deviation based on said CV% unit mean value; and

v) a comparing section directly or indirectly connected at least to said HD monitoring section, said CV% calculating section, said CV% unit mean value calculating section, and said standard deviation calculating section and detecting existence of head dirt spindle based on output from said HD monitoring section, the CV% value in each of said spindles, and preset fourth threshold and preset frequency of HD alarms.

**9.** The system for detecting dirt of detection heads in a Plurality of yarn clearers, which are mounted on a unit system comprising a plurality of spindles, for monitoring yarn quality and others, wherein at least two detection systems out of detection systems described in claims 6 to 8 are included and respective execution results of each systems are combined to judge whether the specific spindle is a spindle with head dirt or not.

Fig. 1

# Fig. 2

# Fig. 3

Fig. 4

A

B

# Fig. 5

A  yarn unevenness signal for head dirt

B  yarn unevenness signal for thick yarn

C  standard yarn unevenness signal

Fig. 6

# Fig. 7

```
                    S0
                      ┌─────────────────┐
                      │    S T A R T     │
                      └─────────────────┘
                              │
  S1                          ▼                        ◄──────┐
            ┌──────────────────────────────────┐              │
            │    detecting φ/calculating        │              │
            │      CV% for each spindle         │              │
            └──────────────────────────────────┘              │
  S2                          │                                │
            ┌──────────────────────────────────┐              │
            │ calculating φ unit mean/calculating CV%          │
            │   unit mean value and calculating │              │
            │   standard  deviation based on those             │
            └──────────────────────────────────┘              │
  S3                          │                                │
                    ◇─────────────────────◇                   │
                   ╱   [comparison]         ╲                  │
                  ╱ each spindle φ > preset   ╲    No           │
                  ╲ threshold value based on unit ╲─────────────┘
                   ╲      mean value φ ?      ╱
                    ◇─────────────────────◇
  S4                          │ Yes
            ┌──────────────────────────────────┐
            │   calculating unevenness σ        │
            │  for specific spindle from        │
            │     CV% unit mean value.          │
            └──────────────────────────────────┘
  S5                          │
                    ◇─────────────────────◇
                   ╱  this σ value is        ╲
                  ╱ within predetermined limit  ╲   No
                  ╲ preset based on CV% unit mean ╲──────────┐
                   ╲  value and unit overall      ╱          │
                    ╲   standard deviation       ╱      S6    │
                     ◇──────── ? ───────◇                     │
  S8                          │ Yes                           ▼
            ┌────────────────────────┐    ┌──────────────────────────────┐
            │  detection head dirt    │    │ yarn number actually changes  │
            └────────────────────────┘    └──────────────────────────────┘
  S9                          │                          │        S7
            ┌────────────────────────┐    ┌──────────────────────────────┐
            │  alarming the effect    │    │     alarming the effect       │
            └────────────────────────┘    └──────────────────────────────┘
                              │                          │
                              ▼                          ▼          S10
                    ┌──────────────────────────────────────────┐
                    │               E N D                       │
                    └──────────────────────────────────────────┘
```

# Fig. 8

unit mean value

unevenness (variation) (- σ) | unevenness (variation) (+ σ)

standard deviation

judge (φ alarm) as actual
change of yarn number

judge as
head dirt

judge (φ alarm) as actual
change of yarn number

# Fig. 9

# Fig. 10

S0 — START

S1 — calculating φ unit mean value and standard deviation

S2 — standard deviation > preset value    No

Yes

S3 — extracting a spindle most different from φ unit mean value

S4 — regarding state of extracted spindle as "head dirt"

S5 — calculating unit mean value and standard deviation except the extracted spindle

S6 — No — standard deviation ≦ preset value

Yes

S7 — END

Fig. 11

Fig. 12

SO ——

START

S1 ——

HD alarm occurrence for a given spindle

S2 ——

within CV%
preset limit for
the spindle ?

No

Yes

S3 ——

adding the number of HD
alarm detections for dirt
detection for the spindle

No

the number of HD alarm
detection for dirt detection per unit
time exceeds preset detection frequency
for any spindle ?

S4

Yes

END

S5

Fig. 13

frequency

dirt detection
preset value

unit time    unit time

t

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10305967 A
- JP 3090639 A